# FASCICULE DE BREVET EUROPEEN

(11) **EP 3 027 324 B1**
(45) Date de publication et mention de la délivrance du brevet: **07.06.2017**
(21) Numéro de dépôt: 13745811.3
(22) Date de dépôt: 29.07.2013
(51) Int. Cl.: B02C 19/08, G01N 1/28

(54) **DISPOSITIF DE BROYAGE D'ÉCHANTILLONS EN MICRO PLAQUE**
VORRICHTUNG ZUM SCHLEIFEN VON PROBEN IN EINER MIKROPLATTE
DEVICE FOR GRINDING SAMPLES IN A MICROPLATE

(43) Date de publication de la demande: 08.06.2016
(73) Titulaire: Genomic, 74160 Saint-Julien-en-Genevois (FR)
(72) Inventeur: GAZEAU, Michel, F-74160 Saint Julien en Genevois (FR); GAZEAU, Daniel, F-34570 Murviel lès Montpellier (FR)
(74) Mandataire: Flesselles, Bruno F.G.
(86) Numéro de dépôt international: PCT/EP2013/065890
(87) Numéro de publication internationale: WO 2015/014382

(56) Documents cités:
- EP-B1- 1 177 276
- FR-A1- 2 990 883
- US-A- 5 330 916
- US-A1- 2005 270 897

## Description

La présente invention concerne le broyage simultané d'échantillons, dans une pluralité de contenants rapprochés, de section pouvant être inférieure à un centimètre carré, avec un dispositif mécanique permettant de faire pivoter dans les deux sens, avec un couple de plusieurs milli newton mètres, une pluralité d'axes, au droit des contenants, tout en exerçant une force d'appui élevée sur chaque échantillon, le tout grâce à un nombre réduit d'actionneurs.

### Domaine d'application :

Ce dispositif est en premier lieu, mais pas exclusivement, destiné à broyer simultanément des échantillons dans une pluralité de tubes, en particulier ayant un petit diamètre (c'est-à-dire de diamètre préférentiellement compris entre 3 et 30 mm), et qui sont proches les uns des autres (l'espacement entre chaque tube étant de l'ordre de 2 mm). Il est parfaitement adapté à son utilisation lorsque les échantillons sont dans une microplaque, préalablement à l'extraction des acides nucléiques et des protéines de ces échantillons et d'une façon plus générale à leur analyse. Ledit système permet de faire le broyage et les analyses dans la même microplaque.

Une microplaque est formée d'un ensemble de tubes solidaires les uns des autres et qui peuvent dans certaines configurations être amovibles. Le modèle le plus classique comporte 12 x 8 tubes au pas de 9 mm. Les tubes peuvent être de section circulaire ou polygonale. Le fond des tubes peut être plat, conique ou hémisphérique.

Par échantillons on entend notamment désigner des organes végétaux, tels graines, feuilles ayant éventuellement subi un séchage, tiges, fleurs, et plus généralement, tout élément solide ou pâteux. Cette liste n'est pas limitative et le dispositif ainsi décrit est également applicable à tout autre échantillon.

### Dispositifs de l'art antérieur

Des broyeurs à billes sont utilisés dans les laboratoires. Une ou plusieurs billes en matériau dur sont introduites dans des tubes avec l'échantillon et éventuellement un tampon liquide. Les tubes, obturés, sont agités violemment pendant un temps qui dépend de la dureté de l'échantillon et de la finesse souhaitée du broyat. Ce dispositif est efficace pour des matrices peu dures, de type feuilles fraiches ou séchées, de graines tendres. Il ne fonctionne qu'avec des billes lourdes, donc volumineuses, pour des graines dures, telles les graines de pois, de maïs, de soja, ou pour des lots de graines de blé, d'orge, de colza. La présence des billes mêlées à l'échantillon est parfois gênante. Un broyage à température négative est impossible, si l'échantillon à broyer n'est pas sec, ou si le tampon liquide n'a pas une température de congélation plus basse que la température de broyage. Si les tubes contenant les broyats ne sont pas disposés au format micro plaque, les broyats doivent être transférés dans des supports de type micro plaque, pour passer aux étapes suivantes d'analyses automatisées. Ce transfert d'échantillons, augmente largement le temps d'opération, le risque de contaminations croisées et de perte de traçabilité.

Le Terminator®, de la société Elexa, Hollande, broie 96 échantillons simultanément, dans une micro plaque à puits peu profonds, à fond plat. Le dispositif de broyage est constitué de 96 pilons, qui martèlent sans tourner, les échantillons. Les échantillons sont de taille réduite et ne doivent pas être très durs, ni baigner dans un liquide.

Un laboratoire a fait fabriquer un broyeur, dont l'élément actif est une pluralité de pistons, qui frappent les échantillons. Les échantillons doivent être contenus dans des tubes très robustes, en général métalliques, pour éviter leur éclatement. Il est nécessaire, avec ce dispositif de l'art antérieur, de prélever tout ou partie des échantillons broyés et de les transférer dans des tubes vierges, en général d'une microplaque en matière plastique, pour la poursuite des analyses. De plus, le broyat peut former une galette, qu'il faut effriter, pour permettre une digestion efficace et rapide par les réactifs, dans le processus aval. Enfin, le transfert manuel d'échantillons augmente fortement le temps d'opération, le risque de contamination croisée entre échantillons et rend problématique leur traçabilité.

Un système d'écrasement de graines est décrit dans la demande de brevet WO 2010/108082 de Pioneer. Ce système est composé de pilons qui écrasent des échantillons dans une plaque de 96 puits. Cette plaque est de taille supérieure aux microplaques standard et ce dispositif est associé a un dispositif de transfert du matériel écrasé vers une micro plaque standard. Ce n'est pas un dispositif de broyage mais un dispositif d'écrasement ou d'éclatement des échantillons et il nécessite une seconde étape d'échantillonnage.

Un autre dispositif de broyage de graines est décrit dans le brevet US 2006/0196369 A1 délivré à la société Monsanto Company. Ce dispositif décrit un système où une tige presse une pièce intermédiaire en contact avec la graine à broyer. Les tiges n'ont pas la capacité de pivoter. La pièce intermédiaire doit être retirée pour accéder à l'échantillon.

La société Genomic, France, a obtenu un brevet Français pour « Procédé et dispositif pour l'extraction d'ADN, d'ARN et de protéines à partir de prélèvements biologiques non liquides » délivré le 16.05.2003 sous le numéro d'enregistrement national 99 05795. Brevet USA N° US 6,695,236 B2 délivré le 24 février 2004. Brevet Européen N° 1177276 du 13 octobre 2004. Ce brevet récite un dispositif de broyage selon la technique du pilon et du mortier, mais ne précise pas de dispositif permettant d'actionner la rotation de l'ensemble des pilons sur une surface aussi réduite que celle d'une microplaque, par exemple. Le broyeur commercialisé, mettant en oeuvre cette invention est le Grind-Ic.

Aucun des moyens de l'art antérieur ne décrit de dispositif permettant de broyer des échantillons en microplaque, en combinant la pression ou les chocs sur les échantillons et la rotation des pilons. La difficulté dans la miniaturisation de ce type d'appareil de broyage réside dans la conception d'un système permettant de mettre en rotation tous les axes broyeurs simultanément, avec un couple élevé et ceci dans un espace restreint. Le système proposé permet d'actionner tous les axes broyeurs de façon synchrone et de fait permet de positionner ces axes sur une surface réduite comme, par exemple un système dans lequel 96 axes peuvent permettre le broyage d'échantillons dans une microplaque standard, permettant, dans un certain nombre de cas, d'éviter le transfert des échantillons broyés dans une autre microplaque pour analyse ou extraction de molécules des échantillons.

En outre, le système proposé, du fait de sa capacité à faire pivoter les axes broyeurs est le seul à permettre de broyer efficacement, aussi bien, un seul grain par contenant que plusieurs grains. On peut notamment utiliser le dispositif pour broyer une quinzaine de grains de blé ou d'orge dans chaque puits d'une microplaque.

L'invention se rapporte ainsi à un dispositif pour le broyage simultané d'une pluralité d'échantillons, caractérisé en ce qu'il comporte une pluralité d'axes pivotants, dotés au moins d'un filet, dont le pas est supérieur au diamètre desdits axes, lesdits axes étant intégrés chacun dans un écrou non pivotant, lesdits axes étant mis en rotation par un mouvement de translation de leur écrou respectif non pivotant le long desdits axes. Un mouvement de translation alternative le long des axes permet auxdits axes d'effectuer un mouvement alternatif de rotation.

Les axes pivotants servent à broyer les échantillons, en exerçant une force importante sur les échantillons, combinée notamment à l'effet de leur rotation et peuvent donc être qualifiés d'axes broyeurs. La force d'écrasement sur les échantillons (obtenues par la translation du bloc contenant les axes broyeurs ou de la plaque contenant les échantillons) contribue également au résultat de broyage. La force appliquée aux échantillons est supérieure à 1 kg, de préférence supérieure à 10 kg, voire supérieure à 15 kg.

De préférence, les échantillons sont contenus dans des contenants, dont la section peut être inférieure à un centimètre carré.

Dans un mode de réalisation préféré, les écrous non pivotants sont formés par une bille captive insérée dans chaque filet (4) de chaque axe broyeur. Ainsi que vu plus haut, les axes pivotants peuvent être dotés de plusieurs filets. L'utilisation de plusieurs filets par axe permet une meilleure application de la force exercée par l'écrou fixe.

Ce mode de réalisation permet de limiter les frottements. Ces billes sont captives dans des logements ménagés à la périphérie des alésages d'une pièce traversée par les axes. Ces logements sont fermés par une contre pièce comportant des alésages pour le passage des dits axes. Des paliers peuvent équiper les alésages de cette contre pièce. Cet ensemble de deux pièces est le multi écrous (2).

La rotation des axes (1) est réalisée par la translation du multi écroux (2). Ainsi, dans ce mode de réalisation préféré, les axes broyeurs (1) sont solidaires les uns avec les autres et présentent tous les mêmes déplacements (en rotation) en fonction du déplacement du multi écroux (2). Dans ce mode de réalisation, les axes présentent tous le même pas des filets sur ces axes. Dans un autre mode de réalisation, certains axes présentent des pas de filets différents les uns des autres. Ces axes présentent donc des vitesses de rotation différentes.

Dans un mode de réalisation particulier, les extrémités desdits axes broyeurs qui ne sont pas en contact avec les échantillons sont maintenues de façon solidaire sur une plaque d'appui (3). Ceci permet une bonne cohésion du dispositif selon l'invention, et permet d'apporter une force d'écrasement sur les échantillons. Il convient toutefois de noter que la capacité de rotation de chaque axe broyeur doit être préservée.

Dans le but de limiter les frottements sur les axes broyeurs, on peut ainsi placer leur extrémité captive en appui sur la plaque d'appui (3) par le truchement d'une bille en matériau dur (tel que l'acier, l'acier inoxydable, trempé ou non). On utilise les billes classiquement utilisées dans les roulements à billes. Ces extrémités captives (non-actives) sont donc alors solidaires les unes avec les autres.

On peut utiliser tout moyen pour solidariser les extrémités captives avec la plaque d'appui, comme l'utilisation d'une collerette au sommet des axes de diamètre supérieur au diamètre des axes (formée par usinage ou rapportée sur les axes) ou l'utilisation d'une goupille traversant chaque axe perpendiculairement. Une contre pièce traversée par les axes, solidarisée avec la plaque d'appui, permet d'empêcher les axes de sortir de leur logement dans la plaque d'appui et de les guider.

Les alésages de cette contre pièce, dans lesquels passent les axes broyeurs peuvent être recouverts d'une matière permettant de diminuer les frottements de ces axes lors de leur rotation. Ce résultat peut également être obtenu en introduisant des paliers en matière à faible coefficient de frottement (plastique, téflon...) dans ces alésages..

Dans certains modes de réalisation, le dispositif selon l'invention comprend ainsi un module comprenant ladite plaque d'appui, les axes broyeurs et l'ensemble multi écrous. Dans un mode de réalisation particulier, ce module est amovible.

Dans certains modes de réalisation, les échantillons sont présents dans des contenants placés sur un plateau porte contenants. Dans un mode de réalisation particulier, ce plateau est doté d'un vibreur/agitateur.

Le broyage des échantillons est réalisé par la combinaison de la force appliquée par la rotation des axes broyeurs et d'une force d'écrasement obtenue par le déplacement longitudinal desdits axes dans le conteneur de l'échantillon. Les axes effectuent alors un mouvement de va et vient dans les contenants d'échantillons. Ce déplacement peut être obtenu, soit par le déplacement des axes, les conteneurs étant fixes, soit par le déplacement des conteneurs, les axes étant fixes.

De préférence, on réalise le mouvement de translation en déplaçant le plateau porte contenants d'échantillons ou le module constitué de la plaque d'appui, des axes broyeurs et du multi écrous en utilisant un système de type cric élévateur à vis, à parallélogrammes déformables.

Dans ce mode de réalisation, on préfère que la vitesse de variation de la distance entre le plateau porte contenants d'échantillons et l'extrémité active des axes broyeurs, d'une part et la vitesse de rotation (pivotement) desdits axes, d'autre part, soient coordonnées.

Afin de pouvoir broyer efficacement les échantillons, il est préférable que les axes broyeurs soient formés d'une ou plusieurs sortes de matériaux durs, c'est-à-dire qui présentent une forte résistance à l'écrasement. Il est rappelé que la dureté d'un matériau définit la résistance qu'oppose une surface de l'échantillon à la pénétration d'un corps plus dur. Il existe plusieurs méthodes de mesure de la dureté d'un matériau. Un matériau dur est entendu comme présentant une dureté supérieure à 2000 sur l'échelle de KNOOP.

On peut ainsi citer l'acier, l'acier inoxydable (que ces aciers soient trempés ou non). L'extrémité active peut être dans un matériau différent du corps de l'axe broyeur, comme le carbure de tungstène ou le carbure de titane. Les axes peuvent également être revêtus d'une couche d'un matériau destinés à améliorer leur glissement dans l'échantillon et leur résistance à l'usure. On peut ainsi utiliser du nitrure de titane à cet effet.

Dans un mode de réalisation préféré, on peut également adapter l'extrémité active des axes broyeurs aux échantillons à broyer et/ou à la forme de leurs contenants, notamment à la forme du fond de leurs contenants.

Enfin, il est préféré que le plateau porte contenant d'échantillons soit doté sur la face qui supporte les contenants, d'une forme adaptée au profil externe des parois des contenants des échantillons.

### Description détaillée du dispositif

Dans un mode de réalisation préféré, les dispositifs sont constitués des éléments suivants :
Une pluralité d'axes broyeurs (1), pourvus sur une partie de leur longueur au moins, d'un ou plusieurs filets (4), dont le pas est supérieur à leur diamètre. Chaque axe broyeur (1) est inséré dans un écrou non pivotant. Le profil des filets des axes, doit correspondre à celui de leur écrou non pivotant respectif, qui provoque leur pivotement, par un déplacement alternatif le long des dits axes, dans tout ou partie de la zone filetée. Les axes broyeurs peuvent être formés de plusieurs matériaux, adaptés aux contraintes mécaniques qu'ils subissent. Ils sont préférentiellement formés à partir de matériaux durs.

Ces matériaux, formant les axes broyeurs, sont notamment choisis parmi l'acier (trempé ou non), l'acier inoxydable (trempé ou non), le carbure de tungstène, le carbure de titane, l'alumine, ou des céramiques (alliages carbone-bore).

L'extrémité active (c'est-à-dire qui est en contact avec les échantillons à broyer) des axes peut avoir différentes formes, pour optimiser l'efficacité du broyage en s'adaptant aux types d'échantillons et à la forme des contenants. Elle peut, par exemple, présenter des rainures pour faire éclater les grains ou des bossages qui miment les molaires.

Un déplacement du multi écrous (2), le long des axes broyeurs (1), entraîne la rotation de ces axes (1). Un déplacement alternatif de ce multi écroux (2) permet donc d'assurer la rotation des axes (1) dans les puits de la microplaque et le broyage des échantillons sous l'effet de ces deux forces.. Ce mouvement du multi écroux (2) peut avantageusement être entrainé par un vérin à air comprimé, mais tout autre moyen de translation convient.

L'ensemble plaque d'appui (3), axes broyeurs (1) et multi écrous (2), constitue un module amovible, qui peut être facilement retiré de son support, afin de nettoyer et décontaminer les axes. Il est avantageux que l'actionneur du multi écrou ne soit pas amovible, afin que le module amovible, plaque d'appui, axes broyeurs et multi écrous soit aisément manipulé.

Le support du module amovible décrit plus haut peut être fixe ou mobile.

Dans un premier mode de réalisation, le support est fixe et c'est la pluralité de contenants qui est mobile. Les contenants sont positionnés et maintenus sur un plateau porte contenants d'échantillons (5). Une plaque couvercle (10) des contenants, dotée de trous laissant passer les axes broyeurs, peut être mise en place. Le plateau porte contenants d'échantillons, est déplacé le long des axes broyeurs. Ce plateau porte contenants d'échantillons, est actionné par un dispositif, capable d'exercer une force appropriée sur l'extrémité active des axes broyeurs. Le dispositif qui actionne le mouvement du plateau peut avantageusement être constitué de un ou plusieurs parallélogrammes déformables (13), de type cric élévateur, mobilisés par un système contrôlable, comme par exemple un moteur électrique et une vis sans fin. Il peut être utile de guider le mouvement du cric élévateur et donc du plateau.

Ce plateau porte contenants d'échantillons est positionné précisément, de façon non rigide, en particulier par le truchement de pièces flexibles (6), telles que ressorts ou tiges de caoutchouc, de type « silent block » lorsqu'il n'est pas contraint en appui. Il peut être muni d'un vibreur/agitateur (8), qui permet de ramener le broyat au fond des contenants, tout en faisant remonter les plus gros fragments en surface, pour qu'un broyage efficace soit effectué en plusieurs cycles de rapprochement et d'éloignement du dit plateau de l'extrémité active des axes broyeurs.

Lorsqu'il est contraint en appui, on préfère que le plateau porte contenant d'échantillons (5) se place en appui solide et précis, sur des pions d'indexage et de butée (7). Les contenants d'échantillons peuvent être positionnés sur le plateau, par le truchement d'une forme qui épouse leur profil extérieur et renforce leur paroi.

Le pivotement des axes et le mouvement du plateau sont coordonnés, pour effectuer efficacement et rapidement le broyage de différentes matrices, sans contamination croisée des échantillons. On peut ainsi stopper la rotation des axes lorsque leur extrémité active est hors des contenants. La vitesse de mouvement du plateau peut varier en fonction du type et de la quantité de matrice à broyer, compte tenu de la vitesse de rotation des axes, ainsi que de l'étape du broyage en cours. Cette coordination peut être contrôlée par un automate programmable.

Dans un autre mode de réalisation, une variante du dispositif décrit précédemment comporte au moins un plateau porte contenants d'échantillons, semblable à celui qui est décrit ci-dessus, mais qui est fixe.

Dans ce mode de réalisation, on utilise les mêmes axes broyeurs (1) et le même multi écrous (2) et on réalise le broyage au moyen d'un seul actionneur, qui déplace au moins un ensemble amovible modifié, comprenant une plaque d'appui (3), la pluralité d'axes broyeurs (1) et le multi écrous (2).

Cet actionneur peut être du même type que celui envisagé pour le plateau (5) porte contenants d'échantillons, décrit dans la version dans laquelle ce plateau (5).

La plaque d'appui et la pièce solidaire de l'actionneur sont préférentiellement reliées par un ou plusieurs éléments élastiques (compressibles et extensibles), tels des ressorts. Lorsque des axes broyeurs (1) rencontrent une résistance qui empêche le déplacement de l'ensemble amovible, résistance qui peut être causée par des graines ou les fonds des contenants, le multi écrou (2) peut alors se déplacer le long des axes broyeurs et les faire pivoter. Les éléments élastiques qui relient la plaque d'appui et la pièce solidaire de l'actionneur, rappellent le multi écrous en sens inverse, dès que la résistance exercée sur des axes broyeurs cesse ou diminue, faisant ainsi pivoter les axes en sens inverse.

On comprendra mieux l'invention à l'aide de la description faite ci-après à titre purement explicatif, de deux modes de réalisation de l'invention, en référence aux figures annexées :

### Description des Figures

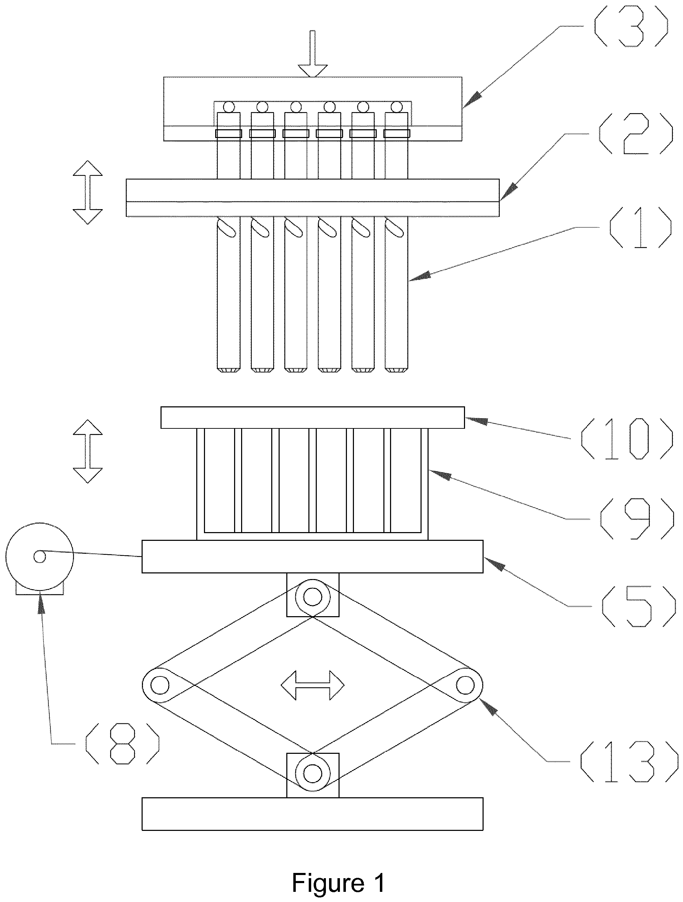

La figure 1 est une vue d'ensemble du dispositif selon la première description.

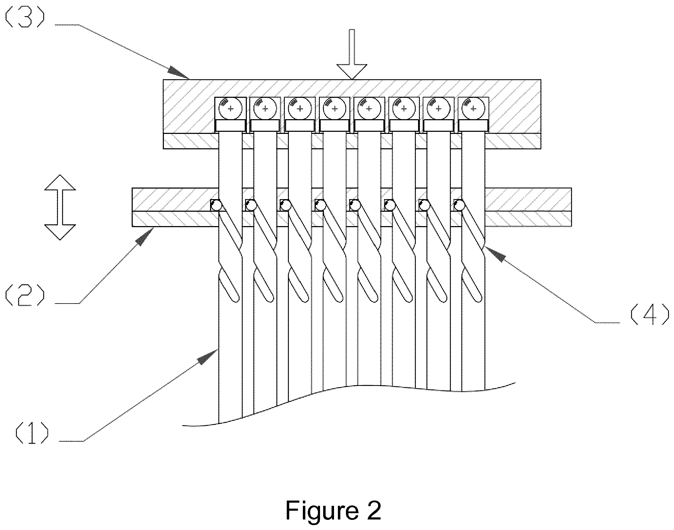

La figure 2 illustre le module amovible, avec (1) les axes broyeurs, dotés d'au moins (4) un filet dont le pas est supérieur au diamètre, (2) le multi écrous comportant au moins une bille captive par filet, qui est déplacé le long des axes broyeurs, selon un mouvement alternatif, (3) la plaque d'appui fixe, avec les billes dures qui appuient sur le sommet des axes broyeurs, lesquels sont maintenus dans la plaque d'appui par une collerette.

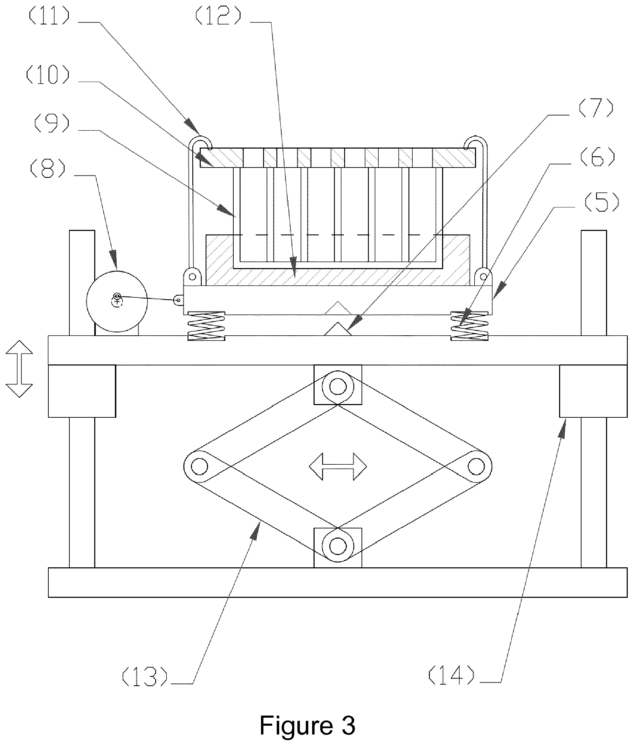

La figure 3 illustre le plateau porte contenants d'échantillons, option plateau mobile et module fixe, avec (5) le plateau proprement dit, (6) les supports flexibles, (7) les pions d'indexage, (8) le vibreur/agitateur, (9) l'ensemble des contenants, (10) la plaque couvercle, (11) l'accroche de la plaque couvercle, (12) la forme de renfort des parois des contenants, (13) l'élévateur de type cric élévateur, (14) le guidage en translation du cric élévateur.

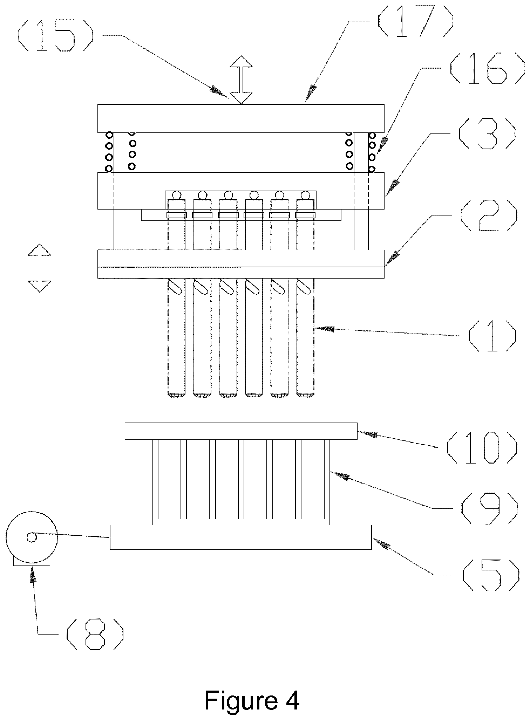

La figure 4 est une vue d'ensemble du dispositif selon la variante décrite supra. Un seul actionneur (15) met en mouvement un module amovible modifié, par rapport au dispositif selon la première description. Dans cette variante, une pièce (17) est solidarisée à l'actionneur unique. Des ressorts (16) s'intercalent entre la pièce solidaire de l'actionneur et la plaque d'appui (3). Lorsqu'il n'y pas de résistance au déplacement de ce module amovible, sur l'extrémité des axes broyeurs, le (2) multi écrous ne se déplace pas le long des axes broyeurs (1) et ces derniers ne pivotent pas. Lorsque des axes broyeurs (1) rencontrent une résistance, c'est le multi écrous (2) qui va se déplacer, entrainant la compression ou l'étirement des ressorts (16) et en même temps le pivotement des axes broyeurs (1). Le dégagement du module amovible, de la résistance rencontrée par les axes broyeurs, permet aux ressorts de reprendre leur forme initiale et ainsi de faire déplacer le multi écrous en sens inverse, provoquant le pivotement des axes broyeurs en sens inverse. Le mouvement alternatif du module amovible, peut être exécuté plusieurs fois pour obtenir le résultat attendu.

Le guidage éventuel du multi écrous et les éléments de support ne sont pas décrits pour les deux exemples de variantes de l'invention. Cela n'entrave pas sa compréhension par l'homme de l'art.

Il n'y a pas de figure illustrant la partie active des axes broyeurs, ni de la forme de renfort des parois des contenants, car ces éléments sont adaptés principalement aux formes des contenants, qui sont multiples.

Les avantages de la présente invention, qui concerne le broyage d'échantillons par le pivotement de multiples axes rapprochés et l'application d'une force importante sur les échantillons, sont :
- Broyer simultanément une pluralité de matrices diverses, telles que un grain de maïs, de soja ou de pois, un ou plusieurs grains de blé, d'orge ou de colza, un fragment de feuille, par exemple, dans une micro plaque en matière plastique, sans la briser. La microplaque peut ainsi être directement placée sur un autre automate pour extraire les ADN, les ARN et les protéines des broyats, ou tout autre type d'analyses, sans transfert obligatoire de prélèvement de parties d'échantillons.
- Former un système simple et efficace, avec un nombre d'actionneurs réduit (au plus deux), soit l'un pour faire pivoter les axes broyeurs et l'autre pour appliquer une force sur chaque échantillon, par l'extrémité active des axes broyeurs. La variante décrite, ne comporte qu'un seul actionneur, pour le même résultat.
- Fournir un broyat non compacté et non mélangé à d'autres corps, comme par exemple des billes.
- Éliminer le risque de contamination croisée des échantillons, car il n'y a pas obligatoirement de transfert manuel à effectuer vers d'autres contenants, ce qui, de plus, fait gagner beaucoup de temps.
- Permettre une décontamination poussée des axes, dans la mesure où le module amovible peut être facilement mis en place et ôté du dispositif.
- Permettre aussi des broyages en milieu liquide, ou à très basse température.

Un tel dispositif s'avère particulièrement utile aux laboratoires qui effectuent de la sélection variétale végétale par marqueurs moléculaires et qui contrôlent la pureté des semences.

## Revendications

1. Dispositif pour le broyage simultané d'une pluralité d'échantillons, contenus dans des contenants, **caractérisé en ce qu'**il comporte une pluralité d'axes pivotants (1) localisés chacun dans un écrou non pivotant, dotés au moins d'un filet (4), dont le pas est supérieur au diamètre desdits axes (1), lesdits axes (1) étant mis en rotation par un mouvement de translation de leur écrou respectif non pivotant le long desdits axes.

2. Dispositif selon la revendication 1, **caractérisé en ce que** lesdits écrous non pivotants consistent en une bille captive insérée dans chaque filet (4) de chaque axe (1).

3. Dispositif selon la revendication 1 ou 2, **caractérisé en ce que** les extrémités desdits axes qui ne sont pas en contact avec lesdits échantillons sont maintenues de façon solidaire sur une plaque d'appui (3).

4. Dispositif selon la revendication 3, **caractérisé en ce que** l'appui de ladite plaque d'appui (3) sur chaque axe broyeur (1) se fait par le truchement d'une bille.

5. Dispositif selon la revendication 3 ou 4, **caractérisé en ce que** la tenue des axes (1) sur ladite plaque d'appui (3) est réalisée par la présence d'une collerette sur les axes ou par la présence d'une goupille traversant chaque axe ainsi qu'une contre pièce solidarisée à ladite plaque d'appui (3).

6. Dispositif selon l'une des revendications 1 à 5, **caractérisé en ce qu'**il comprend un module amovible comprenant la plaque d'appui (3), des axes broyeurs (1) et du multi écrous (2).

7. Dispositif selon l'une des revendications 1 à 6, **caractérisé en ce qu'**il comprend un plateau porte contenants d'échantillons (5) doté d'un vibreur/agitateur (8).

8. Dispositif selon l'une des revendications 1 à 7, **caractérisé en ce que** les axes (1) effectuent un mouvement de va et vient dans les contenants d'échantillons (9).

9. Dispositif selon la revendication 8, **caractérisé en ce que** la vitesse de variation de la distance entre l'extrémité active des axes broyeurs (1) et lesdits contenants (9), d'une part et la vitesse de rotation desdits axes (1), d'autre part, sont coordonnés.

10. Dispositif selon l'une des revendications 1 à 9, **caractérisé en ce que** les axes broyeurs (1) sont formés d'une ou plusieurs sortes de matériaux durs.

11. Dispositif selon l'une des revendications 1 à 10, **caractérisé en ce que** l'extrémité active des axes broyeurs (1) est adaptée aux échantillons à broyer et/ou à la forme de leur contenant (9).

12. Dispositif selon l'une des revendications 1 à 11, **caractérisé en ce que** le plateau porte contenants d'échantillons (5) ou le module constitué de la plaque d'appui (3), des axes broyeurs (1) et du multi écrous (2) sont déplacés par un système de type cric élévateur à vis (13), à parallélogrammes déformables.

13. Dispositif selon l'une des revendications 1 à 12, **caractérisé en ce que** la rotation des axes broyeurs (1) et l'appui des axes broyeurs (1) sur les échantillons sont réalisés avec deux actionneurs (15) au plus.

14. Dispositif selon l'une des revendications 1 à 13, **caractérisé en ce que** le plateau porte contenant d'échantillons (5) est doté sur la face qui supporte les contenants (9), d'une forme adaptée au profil externe des parois des contenants (9) des échantillons.

## Patentansprüche

1. Vorrichtung zum gleichzeitigen Zerkleinern mehrerer Proben, die in Behältern enthalten sind, **dadurch gekennzeichnet, dass** diese mehrere Schwenkachsen (1) umfasst, die jeweils in einer nicht-schwenkenden Mutter angeordnet und mit mindestens einem Gewinde (4) versehen sind, dessen Gang größer ist als der Durchmesser der Achsen (1), wobei die Achsen (1) durch eine Translationsbewegung ihrer jeweiligen nicht-schwenkenden Mutter entlang der Achsen in Rotation versetzt werden.

2. Vorrichtung nach Anspruch 1, **dadurch gekennzeichnet, dass** die nicht-schwenkenden Muttern aus einer Fangkugel bestehen, die in jedes Gewinde (4) jeder Achse (1) eingesetzt ist.

3. Vorrichtung nach Anspruch 1 oder 2, **dadurch gekennzeichnet, dass** die Enden der Achsen, die nicht mit den Proben in Kontakt stehen, fest auf einer Lagerplatte (3) gehalten werden.

4. Vorrichtung nach Anspruch 3, **dadurch gekennzeichnet, dass** die Lagerung der Lagerplatte (3) auf jeder Zerkleinererachse (1) durch eine Kugel erfolgt.

5. Vorrichtung nach Anspruch 3 oder 4, **dadurch gekennzeichnet, dass** der Halt der Achsen (1) auf der Lagerplatte (3) durch das Vorliegen eines Halses auf den Achsen oder durch das Vorliegen eines Stifts, der jede Achse durchquert, sowie ein mit der Lagerplatte (3) fest verbundenes Gegenstück erfolgt.

6. Vorrichtung nach einem der Ansprüche 1 bis 5, **dadurch gekennzeichnet, dass** diese ein abnehmbares Modul umfasst, das die Lagerplatte (3), die Zerkleinererachsen (1) und mehrere Muttern (2) umfasst.

7. Vorrichtung nach einem der Ansprüche 1 bis 6, **dadurch gekennzeichnet, dass** diese ein Plateau umfasst, das Behälter von Proben (5) trägt und mit einer Vibrationsvorrichtung/einem Rührwerk (8) versehen ist.

8. Vorrichtung nach einem der Ansprüche 1 bis 7, **dadurch gekennzeichnet, dass** die Achsen (1) eine Hin- und Herbewegung in den Behältern (9) von Proben bewirken.

9. Vorrichtung nach Anspruch 8, **dadurch gekennzeichnet, dass** die Geschwindigkeit der Variation der Distanz zwischen dem aktiven Ende der Zerkleinererachsen (1) und den Behältern (9) einerseits und die Geschwindigkeit der Rotation der Achsen (1) andererseits koordiniert sind.

10. Vorrichtung nach einem der Ansprüche 1 bis 9, **dadurch gekennzeichnet, dass** die Zerkleinererachsen (1) aus einer oder mehreren Arten harter Materialien gebildet sind.

11. Vorrichtung nach einem der Ansprüche 1 bis 10, **dadurch gekennzeichnet, dass** das aktive Ende der Zerkleinererachsen (1) an die zu zerkleinernden Proben und/oder an die Form ihres Behälters (9) angepasst ist.

12. Vorrichtung nach einem der Ansprüche 1 bis 11, **dadurch gekennzeichnet, dass** das Plateau, das Behälter von Proben (5) trägt, oder das Modul, das aus der Lagerplatte (3), den Zerkleinererachsen (1) und den mehreren Muttern (2) gebildet ist, durch ein System vom Typ einer Schraubenhebewinde (13) mit verformbaren Parallelogrammen verschoben wird.

13. Vorrichtung nach einem der Ansprüche 1 bis 12, **dadurch gekennzeichnet, dass** die Rotation der Zerkleinererachsen (1) und die Lagerung der Zerkleinererachsen (1) an den Proben zusätzlich mit zwei Betätigern (15) erfolgt.

14. Vorrichtung nach einem der Ansprüche 1 bis 13, **dadurch gekennzeichnet, dass** das Plateau, das die Behälter von Proben (5) trägt, auf der Fläche, welche die Behälter (9) trägt, mit einer Form versehen ist, die an das Außenprofil der Wände der Probenbehälter (9) angepasst ist.

## Claims

1. Device for the simultaneous grinding of a plurality of samples contained in containers, **characterized in that** it comprises a plurality of pivoting rods (1) each located in a non-pivoting nut and provided at least with one thread (4) of which the pitch is greater than the diameter of said rods (1), said rods (1) being rotated by a translational movement of their respective non-pivoting nut along said rods.

2. Device according to Claim 1, **characterized in that** said non-pivoting nuts consist of a captive ball inserted into each thread (4) of each rod (1).

3. Device according to Claim 1 or 2, **characterized in that** the ends of said rods which are not in contact with said samples are held in a combined manner on a bearing plate (3).

4. Device according to Claim 3, **characterized in that** said bearing plate (3) bears on each grinding rod (1) via the intermediary of a ball.

5. Device according to Claim 3 or 4, **characterized in that** the rods (1) are held on said bearing plate (3) by the presence of a collar on the rods or by the presence of a pin passing through each rod and also a counterpart secured to said bearing plate (3).

6. Device according to one of Claims 1 to 5, **characterized in that** it comprises a removable module comprising the bearing plate (3), grinding rods (1) and the multi-nut assembly (2).

7. Device according to one of Claims 1 to 6, **characterized in that** it comprises a carrier plate (5) for containers of samples that is provided with a vibrator/agitator (8).

8. Device according to one of Claims 1 to 7, **characterized in that** the rods (1) perform a reciprocating movement in the containers (9) of samples.

9. Device according to Claim 8, **characterized in that** the rate of variation in the distance between the active end of the grinding rods (1) and said containers (9), on the one hand, and the speed of rotation of said rods (1), on the other hand, are coordinated.

10. Device according to one of Claims 1 to 9, **characterized in that** the grinding rods (1) are formed from one or more kinds of hard materials.

11. Device according to one of Claims 1 to 10, **characterized in that** the active end of the grinding rods (1) is adapted to the samples to be ground and/or to the shape of their container (9).

12. Device according to one of Claims 1 to 11, **characterized in that** the carrier plate (5) for containers of samples or the module consisting of the bearing plate (3), the grinding rods (1) and the multi-nut assembly (2) are moved by a system of the screw lifting jack (13) type with deformable parallelograms.

13. Device according to one of Claims 1 to 12, **characterized in that** the rotation of the grinding rods (1) and the pressing of the grinding rods (1) onto the samples are achieved with at most two actuators (15).

14. Device according to one of Claims 1 to 13, **characterized in that** the carrier plate (5) for containers of samples is provided on the face which supports the samples (9) with a shape adapted to the external profile of the walls of the containers (9) of the samples.
